# EUROPÄISCHE PATENTSCHRIFT

(11) **EP 2 245 328 B1**
(45) Veröffentlichungstag und Bekanntmachung des Hinweises auf die Patenterteilung: **21.03.2012**
(21) Anmeldenummer: 09703615.6
(22) Anmeldetag: 13.01.2009
(51) Int. Cl.: F16D 55/36

(54) **VERFAHREN ZUR BETÄTIGUNG EINER NASS LAUFENDEN LAMELLENBREMSE SOWIE NASS LAUFENDE LAMELLENBREMSE**
METHOD FOR ACTUATING A WET MULTIPLE DISK BRAKE AND WET MULTIPLE DISK BRAKE
PROCÉDÉ D'ACTIONNEMENT D'UN FREIN À DISQUES MULTIPLES À BAIN D'HUILE ET FREIN À DISQUES MULTIPLES À BAIN D'HUILE

(30) Priorität: 22.01.2008 DE 102008005434
(43) Veröffentlichungstag der Anmeldung: 03.11.2010
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GEISSLER, Steffen, 63110 Rodgau (DE); PERICEVIC, Aleksandar, 80636 München (DE); TRIMPE, Robert, 82234 Wessling (DE); GRUBER, Robert, 83539 Pfaffing (DE)
(74) Vertreter: Mattusch, Gundula
(86) Internationale Anmeldenummer: PCT/EP2009/000135
(87) Internationale Veröffentlichungsnummer: WO 2009/092526

(56) Entgegenhaltungen:
- JP-A- 2003 074 591
- US-A1- 2003 051 967

## Beschreibung

Die Erfindung betrifft ein Verfahren zur Betätigung einer nass laufenden Lamellenbremse nach dem Oberbegriff des Anspruchs 1 sowie eine nass laufende Lamellenbremse gemäß dem Oberbegriff des Anspruchs 10.

Nass laufende Lamellenbremse bieten gegenüber trocken laufenden Bremsen, beispielsweise Scheibenbremsen, wie sie bislang überwiegend in Straßenfahrzeugen, beispielsweise in schweren Nutzfahrzeugen, zum Einsatz kommen, Vorteile in Bezug auf Robustheit, Standzeit der Bremsbeläge und Umweltbelastung.

Diese trocken laufenden Reibungsbremsen unterliegen einem relativ hohen Verschleiß und erzeugen einen Bremsenabrieb, der zu einer nicht unerheblichen Staubbelastung, insbesondere Feinstaubbelastung der Umwelt beiträgt.

Darüber hinaus erfordert der Bremsbelag-Verschleiß entsprechende Wartungsarbeiten, die zusätzliche Betriebskosten verursachen.

Daneben sind die bekannten Scheibenbremsen aufgrund ihrer offenen Bauart im Bereich von Baustellen und im Gelände störanfällig und benötigen zusätzliche Schutzmaßnahmen im Sinne von Kapselungen.

In Spezial-Lkws, ebenso wie in schweren Baumaschinen, Traktoren und dergleichen, kommen hingegen vornehmlich nass laufende Lamellenbremsen zum Einsatz, bei denen entstehende Bremswärme und der genannte Bremsbelagabrieb mit Kühlöl abgeführt werden.

Diese nass laufenden Lamellenbremsen sind sehr verschleißarm und werden auf einem niedrigen Temperaturniveau betrieben.

Üblicherweise sind die nass laufenden Lamellenbremsen mit einem Achsgetriebe zusammengefasst, so dass das Öl des Achsgetriebes auch zum Betrieb der Lamellenbremse als Kühlöl eingesetzt wird.

Hierdurch wird zwar die Installation der Bremse vereinfacht, es ergeben sich jedoch auch erhebliche Nachteile.

So wird die Lebensdauer des Achsgetriebes durch den im Kühlöl befindlichen Bremsbelagabrieb sowie durch die Erhöhung der Öltemperatur herabgesetzt.

Da keine Zwangsdurchströmung der Lamellen vorgesehen ist und die Wärmeabführung der Achse im Übrigen begrenzt ist, kommt es bei sehr starken und häufigen Bremsungen zu Überhitzungserscheinungen der Bremse, mit der Folge einer Schädigung des Öls und einer sich daraus ergebenden Gefahr von schweren mechanischen Schäden an der Bremse und am Achsgetriebe.

Darüber hinaus bewirkt die hohe Viskosität des zwischen den Reibflächen der Lamellen, also des im Lüftspalt befindlichen Öls auch bei gelöster Bremse Reibungsverluste aufgrund der inneren Reibung des Öls, die zu einem ständig erhöhten Bremswiderstand mit einem entsprechend erhöhten Energieverbrauch beim Betrieb des Fahrzeuges führen.

Diese Reibungsverluste bilden ein dauerhaft vorhandenes und zu überwindendes Restmoment, das insbesondere abhängig ist vom Maß des Lüftspiels, also dem Abstand zwischen den einander zugewandten Reibflächen der Lamellen.

Zwar ist schon versucht worden, dieses Lüftspiel zu vergrößern, um so ein Abfließen des Öls aus dem Lüftspalt zu ermöglichen, jedoch sind die vorgeschlagenen Lüftspiel-Maße nicht für schneller fahrende Straßenfahrzeuge akzeptabel.

So ist beispielsweise empfohlen worden, das Lüftspiel pro Reibkontakt mit mindestens 0,2 mm zu bemessen, allerdings für solche Lamellenbremsen, die in schweren Baumaschinen, Traktoren, Kettenfahrzeugen oder dergleichen zum Einsatz kommen, also in entsprechend langsam fahrenden Fahrzeugen.

Für eine Lamellenbremse mit beispielsweise zehn rotierenden Lamellen, wie sie bei Straßenfahrzeugen zum Einsatz kommen, ergibt sich ein Gesamtlüftspiel vom 20fachen der Einzellüftspalte, d.h., mindestens ein Gesamtlüftspiel von 4 mm. Die dadurch bedingte Verlängerung der Ansprechzeit der Bremse ist vor allem aus sicherheitsrelevanten Überlegungen nicht hinnehmbar, so dass die Vergrößerung des Lüftspiels in dem aus Betriebsgründen gewünschten Maße nicht realisiert wurde.

Die JP 2003074591 offenbart ein Verfahren gemäß dem Oberbegriff des Anspruchs 1 und eine mass laufende Lamellenbrense gemäß dem Obergriff des Anspruchs 10.

Der Erfindung liegt die Aufgabe zugrunde, ein Verfahren sowie eine nass laufende Lamellenbremse der gattungsgemäßen Art so weiterzuentwickeln, dass deren Funktionsfähigkeit verbessert und ihr Betriebsverhalten optimiert wird.

Diese Aufgabe wird durch ein Verfahren mit den Merkmalen des Anspruchs 1 und eine Lamellenbremse mit den Merkmalen des Anspruchs 10 gelöst.

Durch die Erfindung wird erreicht, dass sich bei freier Fahrt ein maximales Lüftspiel einstellt, mit der Folge, dass sich zwischen den einander zugewandten Reibflächen der Lamellen kein Ölfilm herausbildet, mit den zum Stand der Technik beschriebenen Nachteilen.

Bei einer bevorstehenden Bremsung wird die Bremsbereitschaft durch Verkleinerung des Lüftspiels bis hin zu einem leichten Anlegen der Lamellen hergestellt.

Zur Reduzierung der sich aus dem maximalen Lüftspiel ergebenden Ansprechzeit werden der eigentlichen Bremsbetätigung vorauseilende und durch das Bremssystem erkennbare Vorgänge und/oder Signale erfasst und ausgewertet, so dass die Bremsbereitschaft bereits hergestellt ist, ehe das Bremspedal betätigt wird.

Zum Beispiel kann bei jedem Lösen des Gaspedals über einen an diesem Pedal angeordneten Pedalwertgeber der Fahrerwunsch nach einer Reduzierung der Fahrgeschwindigkeit erkannt und in der Erwartung einer nachfolgenden Bremsbetätigung bereits das Lüftspiel verkleinert werden.

Auf diese Weise ist das Ansprechverhalten der Lamellenbremse trotz des großen Lüftspiels gegenüber konventionell betriebenen Bremsen sogar verbessert. So sind von Pkws Setzzeiten des Fußes vom Gaspedal zum Bremspedal bekannt, die im Bereich von 0,15 bis 0,25 Sekunden liegen. Bei schweren Nutzfahrzeugen ist diese Zeit aufgrund der größeren Hebelwege eher länger.

Unter Nutzung dieser Vorlaufzeit können z.B. bei einer elektromechanisch betätigten Bremse, die zur Überwindung von ca. 1 mm Lüftspiel 50 ms benötigt, mehr als 5 mm Lüftspiel ohne erhöhten Ansprechverzug der Bremse realisiert werden.

Bei der Auswertung des Pedalwert-Signals des Gaspedals kann auch der Grad der Wahrscheinlichkeit des Eintretens einer Bremsbetätigung analysiert und können daraus situationsgerecht unterschiedliche Einstellungen des Lüftspiels abgeleitet werden.

Bei relativ langsamem Lösen des Gaspedals, was keinen unmittelbaren Gefahrzustand signalisiert, empfiehlt es sich, das Lüftspiel nur auf ein normales Maß zu verkleinern, beispielsweise von 5 mm auf 1 mm.

Wenn die Lösegeschwindigkeit des Gaspedals einen vorgegebenen Wert überschreitet und damit ein nachfolgender Notbremsvorgang wahrscheinlich ist, kann das Lüftspiel vollständig beseitigt werden, ggf. unter Inkaufnahme eines leichten Anlegens der Lamellen.

Alternativ oder ergänzend zur Auswertung des Pedalwert-Signales des Gaspedals kann die Information eines vorhandenen Abstandswarnsystems zur Vorbereitung auf eine Bremsung im Sinne der Erfindung genutzt werden.

Im Fall des Erkennens einer schnellen oder unzulässigen Abstandsreduzierung zu einem vorausfahrenden Fahrzeug oder bei plötzlich auftauchenden Hindernissen, kann die vorhandene Information des Abstandswarnsystems genutzt werden, um situationsgerecht das Lüftspiel zu reduzieren oder vollständig zu beseitigen.

In diesem Sinne können auch Signale von Fahrstabilitätsregelsystemen (beispielsweise ESP) berücksichtigt werden.

Bei einer Kombination von mehreren Signalen, die einen Schluss auf einen bevorstehenden notwendigen Bremsvorgang zulassen, z.B. aus dem genannten Pedalwertgeber plus einem Abstandswarn-Signal, kann die Wahrscheinlichkeit eines erforderlichen Bremsvorgangs besonders präzise vorausgesagt und damit die Lüftspieleinstellung situationsgerecht vorgenommen werden.

Die Verkleinerung des Lüftspiels hin zu dessen Minimierung vor der eigentlichen Bremsung wird bei jeder Situation, die einen Bremsvorgang vermuten lässt, vorgenommen und danach vorzugsweise für eine Mindestzeitspanne, z.B. 10 Sekunden, aufrechterhalten.

Nach dieser vorgegebenen Haltezeit bzw. bei einer erneuten Betätigung des Gaspedals wird das Lüftspiel wieder auf das ursprüngliche größere Maß entsprechend dem ungebremsten Fahrzustand eingestellt.

Nach einer vorteilhaften Weiterbildung der Erfindung wird die Ölzufuhr zu den Lamellen in Nicht-Bremsphasen unterbrochen, so dass das Kühlöl aus den verbreiterten Lüftspalten herausgeschleudert wird, wodurch die Gefahr der beschriebenen Flüssigkeitsreibung praktisch vollständig ausgeschlossen ist.

Für die Dimensionierung der Lamellen ist die bei einer Bremsung maximal mögliche Bremsenergie maßgebend. So stellt z.B. für einen Schwer-Lkw (18 t zulässiges Gesamtgewicht, zwei Achsen) die sogenannte Hitzerissbremsung eine Maximalanforderung dar. Mit dieser Bremsung wird eine Gefällefahrt des voll beladenen Fahrzeuges bei Höchstgeschwindigkeit auf einem Schwungmassen-Reibungsprüfstand simuliert. Bei einem über 40 Sekunden gehaltenen Bremsmoment von 2.800 Nm und 85 km/h Fahrgeschwindigkeit ergibt sich pro Rad eine Bremsenergie von 5,0 MJ. Diese Energie muss in den unmittelbar die Reibwärme aufnehmenden rotierenden Lamellen zwischengespeichert werden, da die Wärmeabfuhr über das Kühlmedium erheblich längere Zeit in Anspruch nimmt.

Dabei muss die thermisch aktive Masse des Rotorsystems so groß sein, dass die Temperatur der Bauteile 250°C nicht übersteigt, damit eine Ölschädigung vermieden wird.

Für das genannte Beispiel ergibt sich eine notwendige Masse der Rotorlamellen von 40 kg, wenn die fest stehenden, also die Statorlamellen mit organischen Belägen ausgestattet sind, da deren isolierende Wirkung den Wärmeeintrag in die Lamelle behindert. Die Wärmeabfuhr erfolgt im Wesentlichen zwischen den Bremsbetätigungen durch das Kühlöl.

Die Auslegung des Kühlsystems wird durch die durchschnittliche Bremswärme bestimmt, die bei aufeinander folgenden Bremsvorgängen anfallen kann. Für die Auslegung werden Prüfprogramme herangezogen, die sich in der bisherigen Bremsenentwicklung bewährt haben.

Dies sind z.B. für den erwähnten Zwei-Achsigen-LKW mit 18t zulässigem Gesamtgewicht:

| | Energie pro Bremsung | Energie pro Std. Fahrzeit |
|---|---|---|
| Hitzerisstest | | |
| (2,8 kNm; 85 km/h; 40 sec Zykluszeit 12 min) | 5,0 = MJ | 25 MJ/h |
| Gewaltbremstest | 1,55 MJ | 18,6 MJ/h |
| (Stopps aus 90 km/h Zykluszeit 5 min) | | |
| Heißreihe | 0,67 MJ | 20,1 MJ/h |
| (60 Folgebremsungen in 2 min Abstand) | | |
| Rossfeldtest | 0,63 MJ | 69,2 MJ/h |
| (Hochgebirgsabfahrt als Missbrauchstest; 1030 m Höhenunterschied; 30 km/h; 22 min Fahrzeit; ca. 110 Bremsungen) | | |

Für die Dimensionierung des Kühlsystems sind die Bedingungen des Rossfeldtestes maßgebend. Es ergibt sich ein Kühlleistungsbedarf von ca. 20 kw pro Bremse. Die Ölzufuhr ist in diesem Extremtest während der gesamten Fahrdauer aktiv.

Für die notwendige Nachkühlzeit bildet wiederum der Hitzerisstest die Maximalforderung. Durch den hohen Energieeintrag ist zur Rückkühlung auf 50°C eine Nachkühlzeit von ca. 6 min erforderlich.

Bei leichten Anpassungsbremsungen, die mehr als 90 % aller Bremsaktivitäten ausmachen, ist nur eine geringe Nachlaufzeit der Ölzufuhr erforderlich, so dass im Normalbetrieb die durch das Kühlöl verursachten Reibverluste vermieden werden können.

Die Ölzufuhr kann im Falle einer elektromotorisch angetriebenen Ölpumpe durch deren Abschalten unterbrochen werden. Eine Ventilsteuerung ist dagegen erforderlich, wenn auch nach Ablaufen des Öls aus dem Bremsengehäuse das dann im Reservoir befindliche Kühlöl noch weiter heruntergekühlt werden soll. In diesem Fall steuert ein Mehrwegeventil den Ölstrom in einen Kühlkreislauf vom Reservoir zu einem Wärmetauscher bzw. vom Wärmetauscher zum Reservoir. Auf diese Weise können die Nicht-Bremsphasen zur verbesserten Kühlung genutzt werden, ohne dass zusätzliche Reibungsverluste in der Bremse hervorgerufen werden.

Die Abschaltung der Ölpumpe bzw. die Steuerung der Ölzufuhr kann durch das vorhandene Bremsregelsystem in Abhängigkeit von den Bremsaktivitäten und der daraus resultierenden abzuführenden Bremswärme bedarfsgerecht erfolgen.

Weitere vorteilhafte Ausbildungen der Erfindung sind in den Unteransprüchen gekennzeichnet.

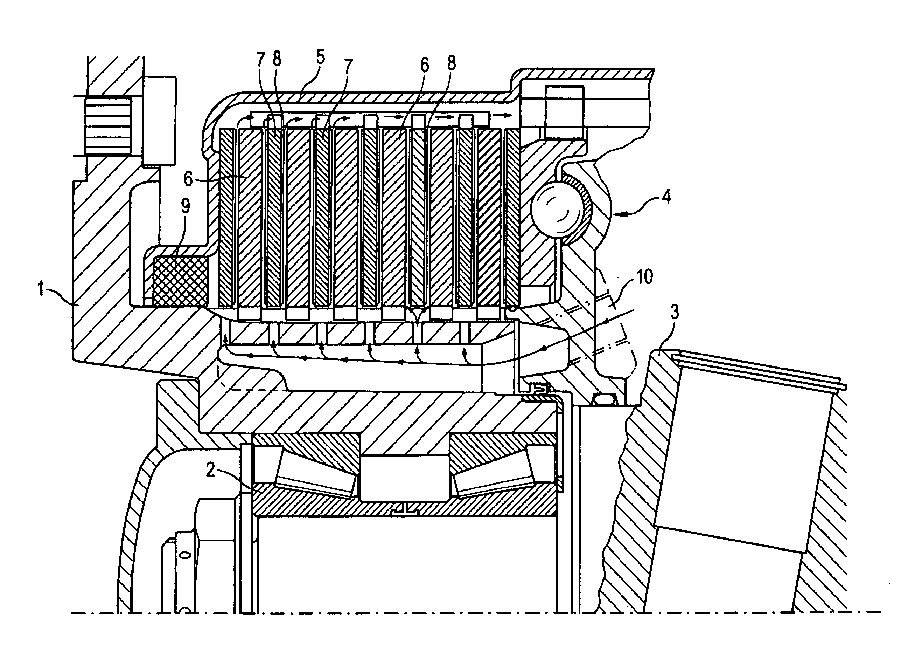

Ein Ausführungsbeispiel einer erfindungsgemäßen Lamellenbremse wird nachfolgend anhand der beigefügten Zeichnung beschrieben.

Die einzige Figur zeigt einen Teilausschnitt einer Lamellenbremse in einer geschnittenen Seitenansicht.

In der Figur ist eine nass laufende Lamellenbremse dargestellt, die in eine Radnabe 1 eines Straßenfahrzeuges integriert ist, wobei die Radnabe 1 auf einem Radlager 2 eines Achsschenkels 3 drehbeweglich gelagert ist.

Mit dem Achsschenkel 3 ist ein Stator 4 verdrehsicher verbunden, der mehrere, parallel und abständig zueinander angeordnete, radial sich erstreckende fest stehende Lamellen 6 aufweist, zwischen denen jeweils eine rotierende, mit der Radnabe 1 verdrehsicher verbundene Lamelle 7 angeordnet ist, wobei die Lamellen 6, 7 in einem Statorgehäuse 5 platziert sind, das gegenüber der Radnabe 1 über eine Dichtung 9 abgedichtet ist.

Auf den einander zugewandten Seiten weist zumindest eine der jeweiligen Lamellen 6, 7 einen Reibbelag auf, der im Fall einer Bremsung an der gegenüberliegenden Fläche der anderen Lamelle 6, 7 reibend anliegt.

Über einen Kühlölanschluss 10 wird, entsprechend der Richtung der Pfeile, Kühlöl zwischen die Lamellen 6, 7 gerührt und von dort abgeführt, wobei dieses Kühlöl zum einen den beim Bremsen entstehenden Abrieb der Reibbeläge 8 fortführt und zum anderen die entstehende Reibwärme.

Erfindungsgemäß werden nach einem Lösen der Bremse die einander zugeordneten Lamellen 6, 7 so weit voneinander getrennt, dass sich ein ölfreies oder weitgehend ölfreies Lüftspiel zwischen den Lamellen 6, 7 ausbildet. Vor einer Bremsung wird das Lüftspiel durch Zustellen der Lamellen so weit minimiert, dass ein schnelles Anpressen der Lamellen gegeneinander, d.h. ein schnelles Bremsen möglich ist.

## Patentansprüche

1. Verfahren zur Betätigung einer mittels Kühlöl nass laufenden Lamellenbremse, insbesondere für ein Straßenfahrzeug, wobei bei eine Bremsung fest stehende und rotierende, radial ausgerichtete Lamellen (6, 7) unter Überwindung eines Lüftspiel gegeneinander gedrückt werden, wobei nach einem Lösen der Bremse die einander zugeordneten Lamellen (6, 7) so weit voneinander getrennt werden, dass sich ein ölfreies oder weitgehend ölfreies Lüftspiel ausbildet, **dadurch gekennzeichnet, dass** vor einer Bremsung das Lüftspiel durch Zustellen der Lamellen (6, 7) minimiert wird.

2. Verfahren nach Anspruch 1, **dadurch gekennzeichnet, dass** das Zustellen der Lamellen hin zu einem minimierten Lüftspiel abhängig von einer erwarteten Bremsung erfolgt.

3. Verfahren nach Anspruch 1 oder 2, **dadurch gekennzeichnet, dass** eine Reduzierung der Fahrgeschwindigkeit des Fahrzeugs erkannt und die Lamellen bis zu dem minimalen Lüftspiel zugestellt werden.

4. Verfahren nach einem der vorhergehenden Ansprüche, **dadurch gekennzeichnet, dass** die Reduzierung der Fahrgeschwindigkeit durch ein Lösen des Gaspedals erkannt wird.

5. Verfahren nach einem der vorhergehenden Ansprüche, **dadurch gekennzeichnet, dass** die Zustellung der Lamellen hin zu einem minimalen Lüftspiel abhängig von der Lösegeschwindigkeit des Gaspedals erfolgt.

6. Verfahren nach einem der vorhergehenden Ansprüche, **dadurch gekennzeichnet, dass** die Zustellung der Lamellen zur Minimierung des Lüftspiels abhängig von Informationen des Pedalwertgebers und/oder eines Abstandswarnsystems und/oder eines Fahrstabilitätsregelsystems erfolgt.

7. Verfahren nach einem der vorhergehenden Ansprüche, **dadurch gekennzeichnet, dass** die Minimierung des Lüftspiels nach einer vorgegebenen Haltezeit und/oder nach erneuter Betätigung des Gaspedals zurückgestellt wird.

8. Verfahren nach einem der vorhergehenden Ansprüche, **dadurch gekennzeichnet, dass** nach einem Lösen der Bremse eine Zufuhr des Kühlöls abgeschaltet und vor einer Bremsung bei einem Zustellen der Lamellen zu einem minimierten Lüftspiel wieder eingeschaltet wird.

9. Verfahren nach einem der vorhergehenden Ansprüche, **dadurch gekennzeichnet, dass** das Kühlöl nach Abschalten der Zufuhr in einem separaten Kühlkreislauf gekühlt wird.

10. Mittels Kühlöl nass laufende Lamellenbremse, insbesondere für ein Straßenfahrzeug mit parallel und abständig zueinander angeordneten, fest stehenden Lamellen (6), zwischen denen jeweils eine drehbare Lamelle (7) angeordnet ist, wobei bei einer Bremsung die sich radial erstreckenden Lamellen (6, 7) unter Überwindung eines Lüftspiels gegeneinander pressbar und nach einem Lösen der Bremse unter Bildung des Lüftspiels voneinander trennbar sind, **dadurch gekennzeichnet, dass** eine Steuerungseinrichtung vorgesehen ist, mit der die Lamellen (6, 7) vor einer Bremsung hin zu einem minimierten Lüftspiel verstellbar sind.

11. Lamellenbremse nach Anspruch 10, **dadurch gekennzeichnet, dass** die Steuerungseinrichtung an einen mit einem Gaspedal des Fahrzeuges verbundenen und dessen Betätigung erkennenden Pedalwertgeber und/oder einem Abstandswarn-System und/oder einem Fahrstabilitätsregelsystem verbunden ist.

12. Lamellenbremse nach Anspruch 10 oder 11, **dadurch gekennzeichnet, dass** das Kühlöl nach einem Lösen der Bremse in einen Kühlkreislauf führbar ist.

13. Lamellenbremse nach einem der Ansprüche 10 bis 12, **dadurch gekennzeichnet, dass** das Kühlkreislauf einen Wärmetauscher aufweist.

14. Lamellenbremse nach einem der Ansprüche 10 bis 13, **dadurch gekennzeichnet, dass** das Kühlkreislauf ventilgesteuert ist.

## Claims

1. A method for actuating a multiple disk brake which is run wet by means of cooling oil, especially for a road vehicle, wherein stationary and rotating, radially aligned disks (6, 7) are pressed against one another in the event of a braking operation, closing a release clearance in the process, wherein after the brake is released, the mutually associated disks (6, 7) are separated from one another by an amount such that an oil-free or largely oil-free release clearance is formed, **characterized in that** the release clearance is minimized by advancing the disks (6, 7) before a braking operation.

2. The method as claimed in claim 1, **characterized in that** the advancing of the disks towards a minimized release clearance is carried out in dependence upon an expected braking operation.

3. The method as claimed in claim 1 or 2, **characterized in that** a reduction in the speed of travel of the vehicle is detected, and the disks are advanced as far as the minimum release clearance.

4. The method as claimed in one of the preceding claims, **characterized in that** the reduction in the speed of travel is detected through release of the accelerator pedal.

5. The method as claimed in one of the preceding claims, **characterized in that** the advancing of the disks towards a minimum release clearance is carried out in dependence upon the release speed of the accelerator pedal.

6. The method as claimed in one of the preceding claims, **characterized in that** the advancing of the disks to minimize the release clearance is carried out in dependence upon information from the pedal value transmitter and/or from a distance warning system and/or from a vehicle stability control system.

7. The method as claimed in one of the preceding claims, **characterized in that** the minimization of the release clearance is reversed after a predetermined maintenance time and/or after renewed actuation of the accelerator pedal.

8. The method as claimed in one of the preceding claims, **characterized in that** supply of the cooling oil is switched off after release of the brake and is switched on again before a braking operation while the disks are being advanced towards a minimized release clearance.

9. The method as claimed in one of the preceding claims, **characterized in that** the cooling oil is cooled in a separate cooling circuit after the supply is switched off.

10. A multiple disk brake that is run wet by means of cooling oil, in particular for a road vehicle, having stationary disks (6), which are arranged parallel to and at a distance from one another, arranged between which there is in each case a rotatable disk (7), wherein the radially extending disks (6, 7) can be pressed against one another in the event of a braking operation, closing a release clearance in the process, and, after the brake is released, can be separated from one another, forming the release clearance in the process, **characterized in that** a control device is provided, by means of which the disks (6, 7) can be adjusted towards a minimized release clearance before a braking operation.

11. The multiple disk brake as claimed in claim 10, **characterized in that** the control device is connected to a pedal value transmitter, which is connected to an accelerator pedal of the vehicle and detects the actuation thereof, and/or to a distance warning system and/or to a vehicle stability control system.

12. The multiple disk brake as claimed in claim 10 or 11, **characterized in that** the cooling oil can be passed into a cooling circuit after the brake is released.

13. The multiple disk brake as claimed in one of claims 10 to 12, **characterized in that** the cooling circuit comprises a heat exchanger.

14. The multiple disk brake as claimed in one of claims 10 to 13, **characterized in that** the cooling circuit is valve-controlled.

## Revendications

1. Procédé d'actionnement d'un frein à disques multiples fonctionnant de manière humide au moyen d'une huile de refroidissement, notamment pour un véhicule routier, dans lequel, lors d'un freinage, des disques (6, 7) fixes et tournants et dirigés radialement sont pressés les uns vers les autres en surmontant un jeu, dans lequel, après un desserrage du frein, les disques (6, 7) associés les uns aux autres sont séparés si loin les uns des autres qu'il se forme un jeu exempt d'huile ou, dans une grande mesure, exempt d'huile, **caractérisé en ce que**, avant un freinage, on minimise le jeu en rapprochant les disques (6, 7).

2. Procédé suivant la revendication 1, **caractérisé en ce qu'**on effectue le rapprochement des disques vers un jeu minimisé en fonction d'un freinage auquel on s'attend.

3. Procédé suivant la revendication 1 ou 2, **caractérisé en ce qu'**on détecte une réduction de la vitesse de déplacement du véhicule et on rapproche les disques jusqu'au jeu minimum.

4. Procédé suivant l'une des revendications précédentes, **caractérisé en ce qu'**on détecte la réduction de la vitesse de déplacement par un relâchement de la pédale des gaz.

5. Procédé suivant l'une des revendications précédentes, **caractérisé en ce qu'**on effectue le rapprochement des disques vers un jeu minimum en fonction de la vitesse de relâchement de la pédale des gaz.

6. Procédé suivant l'une des revendications précédentes, **caractérisé en ce qu'**on effectue le rapprochement des disques pour la minimisation du jeu en fonction d'informations de l'indicateur de pédale et/ou d'un système d'avertissement de distance et/ou d'un système de régulation de la stabilité de conduite.

7. Procédé suivant l'une des revendications précédentes, **caractérisé en ce qu'**on revient de la minimisation du jeu après un temps d'arrêt prescrit et/ou après un actionnement renouvelé de la pédale des gaz.

8. Procédé suivant l'une des revendications précédentes, **caractérisé en ce que**, après un desserrage du frein, on interrompt une arrivée de l'huile de refroidissement et, avant un freinage, on la remet lors d'un rapprochement des disques vers un jeu minimisé.

9. Procédé suivant l'une des revendications précédentes, **caractérisé en ce qu'**on refroidit l'huile de refroidissement, après l'interruption de l'arrivée, dans un circuit de refroidissement distinct.

10. Frein à disques multiples fonctionnant en voie humide au moyen d'huile de refroidissement, notamment pour un véhicule routier, ayant des disques fixes disposés parallèlement et à distance entre eux, entre lesquels est disposé respectivement un disque (7) tournant, dans lequel, lors d'un freinage, les disques (6, 7) s'étendant radialement peuvent être pressés l'un contre l'autre en surmontant un jeu et, après un desserrage du frein, peuvent être séparés les uns des autres en formant le jeu, caractérisé en qu'il est prévu un dispositif de commande par lequel les disques (6, 7) peuvent être, avant un freinage, déplacés jusqu'à un jeu minimisé.

11. Frein à disques suivant la revendication 10, **caractérisé en ce que** le dispositif de commande est relié à un indicateur de pédale relié à la pédale des gaz du véhicule et détectant son actionnement et/ou à un système d'avertissement de distance et/ou à un système de régulation de la stabilité de conduite.

12. Frein à disques suivant la revendication 10 ou 11, **caractérisé en ce que** l'huile de refroidissement peut, après un desserrage du frein, être envoyée dans un circuit de refroidissement.

13. Frein à disques suivant l'une des revendications 10 à 12, **caractérisé en ce que** le circuit de refroidissement comporte un échangeur de chaleur.

14. Frein à disques suivant l'une des revendications 10 à 12, **caractérisé en ce que** le circuit de refroidissement est commandé par un robinet.
